# EUROPEAN PATENT SPECIFICATION

(11) **EP 3 094 906 B1**
(45) Date of publication and mention of the grant of the patent: **21.04.2021**
(21) Application number: 14868898.9
(22) Date of filing: 09.12.2014
(51) Int. Cl.: F16L 9/18, F16L 59/14, F16L 53/00, B33Y 80/00, F16L 59/12, F28F 13/08, F28D 7/10, F28F 1/00, F16L 53/70

(54) **METHOD FOR MAKING A HEAT-SHIELDED CONDUIT**
HERSTELLUNGSVERFAHREN FÜR EINE WÄRMEABSCHIRMENDE LEITUNG
METHODE DE FABRICATION D'UNE CANALISATION À ÉCRAN THERMIQUE

(30) Priority: 12.12.2013 US 201361915076 P
(43) Date of publication of application: 23.11.2016
(73) Proprietor: Raytheon Technologies Corporation, Farmington, CT 06032 (US)
(72) Inventor: HARRIS, Meggan, Colchester, Connecticut 06415 (US)
(74) Representative: Dehns
(86) International application number: PCT/US2014/069284
(87) International publication number: WO 2015/089033

(56) References cited:
- EP-A1- 0 313 194
- EP-A1- 2 653 770
- WO-A1-2015/048374
- DE-A1-102008 002 096
- DE-U1-202008 006 379
- GB-A- 2 290 848
- JP-A- H07 190 291
- JP-A- H08 285 147
- US-A1- 2001 012 476
- US-A1- 2002 096 225
- US-A1- 2009 000 681

## Description

### BACKGROUND

The present invention relates to conduits for carrying fluids, such as fuel or oil, in gas turbine engines, and in particular to heat-shielded conduits. Conduits, such as fuel lines, or oil lines, may need to pass through hot regions of a gas turbine engine. When exposed to heat, hydrocarbons, such as jet fuel or oil, may form carbonaceous deposits on inside surfaces of the fuel or oil lines. The deposits may accumulate to the point where they restrict the flow of fuel or oil, resulting in damage or operational failure of a portion of the gas turbine engine.

Fuel or oil lines in gas turbine engines typically have a foil insulation wrapped around the exterior of the line to insulate the line and shield the fluid in the line from exposure to heat. Installation and maintenance of such heat shielding can be costly. In addition, such heat shielding is not always as effective as desired, requiring additional, costly measures to insure the lines remain clear of deposits. A more effective and more economical heat-shielded conduit is desired. DE 20 2008 006379 U1 describes a coaxial profile for an internal heat exchanger

WO2015048374 A1 corresponds to European patent application EP14849740 and constitutes prior art according to Art. 54(3) EPC. This document discloses a manifold tube with integral heat shield.

### SUMMARY

A method for making a heat-shielded conduit is defined in claim 1. The method includes building the heat-shielded conduit by a layer-by-layer additive manufacturing process. The method also includes forming, while building the heat-shielded conduit, a tube and a heat shield radially surrounding the tube. The method includes integrally forming a truss structure together with both of the tube and the heat shield to space the heat shield from the tube and maintain a first gap between the heat shield and the tube.

### BRIEF DESCRIPTION OF THE DRAWINGS

FIG. 1 is a perspective view of a heat-shielded conduit.
FIG. 2 is a side cross-sectional view of the heat-shielded conduit of FIG. 1.
FIG. 3 is a side cross-sectional view of a heat-shielded conduit in which a diameter of the tube decreases along a length of the conduit for increasing fluid flow velocity within the tube along the length of the conduit.
FIG. 4 is a side cross-sectional view of a heat-shielded conduit in which a diameter of the tube decreases along a first length of the conduit; and the diameter of the tube increases along a second length of the conduit.
FIG. 5 is a side cross-sectional view of a heat-shielded conduit in which a gap decreases along a length of the conduit for increasing cooling fluid flow velocity within the gap along the length of the conduit.
FIG. 6 is a side cross-sectional view of a heat-shielded conduit in which a gap decreases along a first length of the conduit, and the gap increases along a second length of the conduit.
FIG. 7 is a side cross-sectional view of a heat-shielded conduit including a fitting

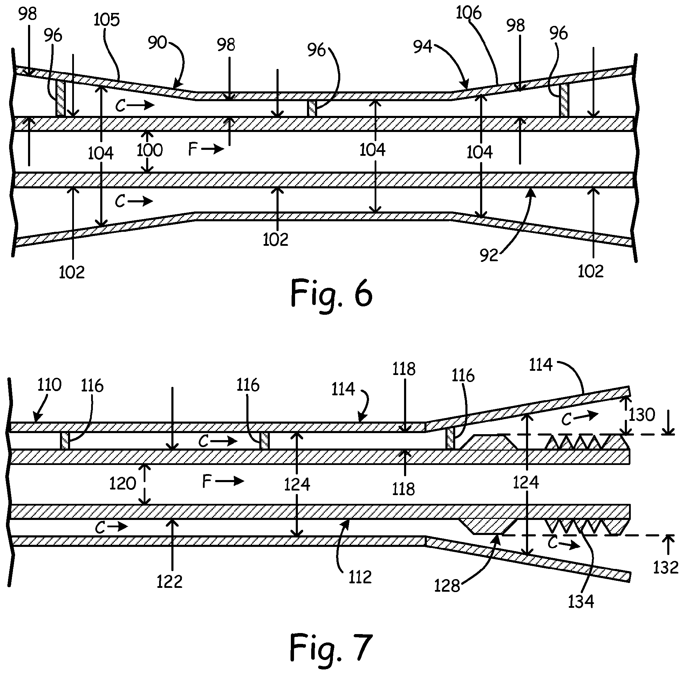

Among all the heat-shielded conduits shown in the figures only the heat-shielded conduit of figure 7 corresponds to the method according to the invention.

### DETAILED DESCRIPTION

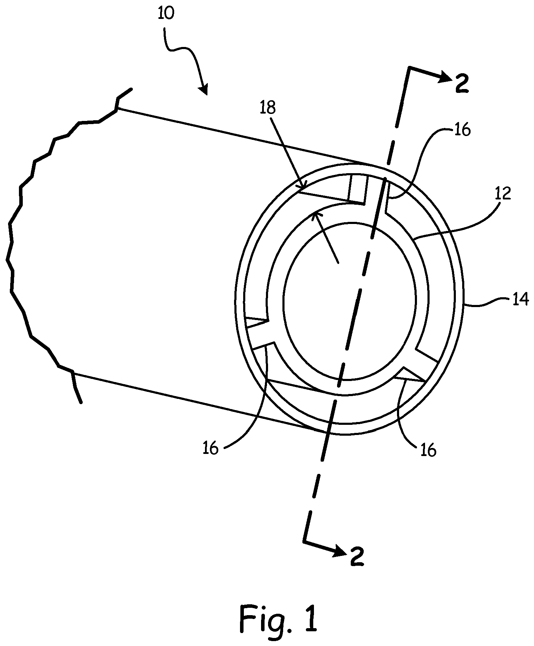

FIG. 1 is a perspective cross-sectional view of a portion of heat-shielded conduit. As shown in FIG. 1, conduit 10 includes tube 12, heat shield 14, and truss structure 16. Heat shield 14 radially surrounds tube 12 to form first gap 18. Truss structure 16 is formed integrally with tube 12 and heat shield 14 such that conduit 10 is a one-piece structure. Truss structure 16 spaces heat shield 14 from tube 12 to maintain first gap 18.

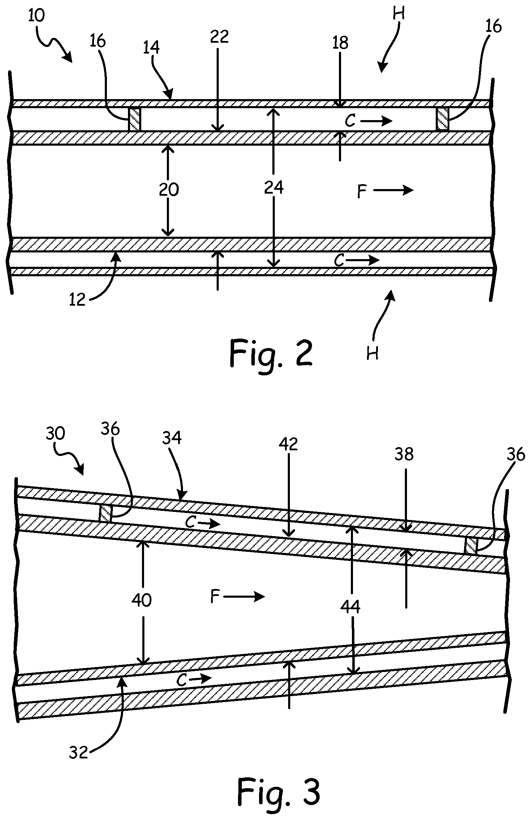

FIG. 2 is a side cross-sectional view of the heat-shielded conduit of FIG. 1. As shown in FIG. 2, tube 12 includes tube inner diameter 20 and tube outer diameter 22. Heat shield 14 includes shield inner diameter 24. In the embodiment of FIG. 2, tube inner diameter 20 does not vary along a length of conduit 10. Tube outer diameter 22 and shield inner diameter 24 also do not vary along the length of conduit 10, thus first gap 18 does not vary along the length of conduit 10.

Considering FIGS. 1 and 2 together, in operation, fluid F flows through tube 12 of conduit 10, bounded by tube inner diameter 20. Heat shield 14 and first gap 18 shield tube 12 from heat external to conduit 10. First gap 18 may contain another fluid, such as air, that is a poor conductor of heat to slow the transfer of heat from heat shield 14 to tube 12.

In the embodiment shown in FIG. 1, truss structure 16 includes a plurality of rectilinear spokes spaced circumferentially around tube 12 and extending radially between heat shield 14 and tube 12. Alternatively, truss structure 16 may include a plurality of round or square pillars, arcuate segments, or similar structures spacing heat shield 14 from tube 12 to maintain first gap 18. Truss structure 16 is not necessarily a poor conductor of heat, but, by design, it covers a relatively small area between heat shield 14 and tube 12, and thus contributes little to an overall transfer of heat to tube 12.

The fluid in first gap 18 may be static, or may be a flow of cooling fluid C as shown in FIG. 2. Cooling fluid C flowing through first gap 18 carries much of external heat H absorbed by heat shield 14 away from heat shield 14 and out of conduit 10 before it reaches tube 12. Truss structure 16 does not significantly impede the flow of cooling fluid C through gap 18. This feature permits conduit 10 to operate under more extreme external heat conditions. FIG. 2 shows cooling fluid C flowing in the same direction as fluid F, which may be the case if the source of fluid F and the source of cooling fluid C are located at the same end of conduit 10. However, it is understood that cooling fluid C and fluid F may flow counter-currently for enhanced heat transfer efficiency.

Conduit 10 is able to provide more effective heat shielding than prior art insulated lines, eliminating or reducing deposit build-up in tube 12. Installation and maintenance costs are much lower because tube 12, heat shield 14, and truss structure 16 are integrally formed together by additive manufacturing processes, as described further below. Thus, conduit 10 may be installed as a single piece, requiring little, if any, additional maintenance.

FIG. 3 is a side cross-sectional view of another embodiment of a heat-shielded conduit. As shown in FIG. 3, conduit 30 includes tube 32, heat shield 34, and truss structure 36. Heat shield 34 radially surrounds tube 32 to form first gap 38. Truss structure 36 is identical to truss structure 16 described above, and is formed integrally with tube 32 and heat shield 34 such that conduit 30 is a one-piece structure. Tube 32 includes tube inner diameter 40 and tube outer diameter 42. Heat shield 34 includes shield inner diameter 44. In the embodiment of FIG. 3, tube inner diameter 40 varies along a length of conduit 30 for varying fluid flow velocity of fluid F within tube 32 along the length of conduit 30. Tube outer diameter 42 and shield inner diameter 44 vary correspondingly with tube inner diameter 40 along the length of conduit 30; thus first gap 38 does not vary along the length of conduit 30. This embodiment may be employed, for example, under conditions where heat external to conduit 30 increases along the length of conduit 30 and increasing the fluid flow velocity of fluid F reduces the time spent in a portion of conduit 30 exposed to the increased heat.

While the embodiment of FIG. 3 illustrates the case in which tube inner diameter 40 decreases along a length of conduit 30 for increasing fluid flow velocity of fluid F within tube 32 along the length of conduit 30, it is understood that by symmetry, the present invention encompasses embodiments in which tube inner diameter 40 increases along a length of conduit 30 for decreasing fluid flow velocity of fluid F within tube 32 along the length of conduit 30. This could be accomplished merely by reversing the direction of flow of fluid F in tube 32.

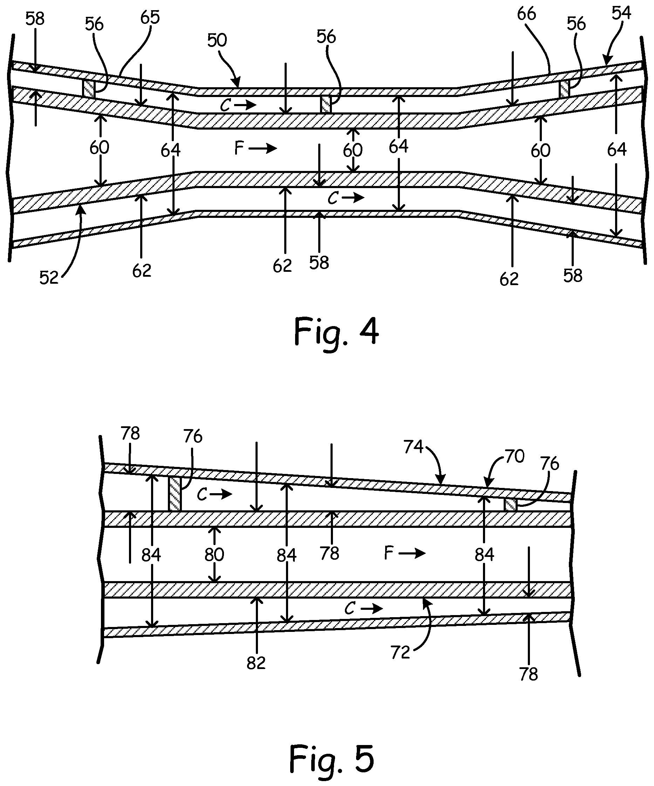

FIG. 4 is a side cross-sectional view of another embodiment of a heat-shielded conduit. As shown in FIG. 4, conduit 50 includes tube 52, heat shield 54, and truss structure 56. Heat shield 54 radially surrounds tube 52 to form first gap 58. Truss structure 56 is identical to truss structure 16 described above, and is formed integrally with tube 52 and heat shield 54 such that conduit 50 is a one-piece structure. Tube 52 includes tube inner diameter 60 and tube outer diameter 62. Heat shield 54 includes shield inner diameter 64. In the embodiment of FIG. 4, tube inner diameter 60 decreases along first length 65 of conduit 50 for increasing fluid flow velocity of fluid F within tube 52 along first length 65. Tube inner diameter 60 also increases along second length 66 of conduit 50 for decreasing fluid flow velocity of fluid F within tube 52 along second length 66. Tube outer diameter 62 and shield inner diameter 64 vary correspondingly with tube inner diameter 60 along the length of conduit 50, thus first gap 58 does not vary along the length of conduit 50. This embodiment may be employed, for example, under conditions where heat external to conduit 50 is at a maximum between first length 65 and second length 66 and increasing the fluid flow velocity of fluid F reduces the time spent in a portion of conduit 30 exposed to the maximum heat.

FIG. 5 is a side cross-sectional view of another embodiment of a heat-shielded conduit. As shown in FIG. 5, conduit 70 includes tube 72, heat shield 74, and truss structure 76. Heat shield 74 radially surrounds tube 72 to form first gap 78. Truss structure 76 is formed integrally with tube 72 and heat shield 74 such that conduit 70 is a one-piece structure. Tube 72 includes tube inner diameter 80 and tube outer diameter 82. Heat shield 74 includes shield inner diameter 84. In the embodiment of FIG. 5, neither tube inner diameter 80 nor tube outer diameter 82 vary along a length of conduit 70. Shield inner diameter 84 does vary along the length of conduit 70. Thus, first gap 78, formed between heat shield 74 and tube 72, also varies along the length of conduit 70 for varying the flow velocity of cooling fluid C within first gap 78 along the length of conduit 70. This embodiment may be employed, for example, under conditions where heat external to conduit 70 increases along the length of conduit 70 and increasing the fluid flow velocity of cooling fluid C increases the speed and efficiency at which heat is removed along a portion of conduit 70 exposed to the increased heat.

While the embodiment of FIG. 5 illustrates the case in which first gap 78 decreases along a length of conduit 70 for increasing the fluid flow velocity of cooling fluid C within first gap 78 along the length of conduit 70, it is understood that by symmetry, the present invention encompasses embodiments in which first gap 78 increases along a length of conduit 70 for decreasing the fluid flow velocity of cooling fluid C within first gap 78 along the length of conduit 70. This could be accomplished merely by reversing the flow direction of cooling fluid C in first gap 78.

FIG. 6 is a side cross-sectional view of another embodiment of a heat-shielded conduit. As shown in FIG. 6, conduit 90 includes tube 92, heat shield 94, and truss structure 96. Heat shield 94 radially surrounds tube 92 to form first gap 98. Truss structure 96 is identical to truss structure 76 described above, and is formed integrally with tube 92 and heat shield 94 such that conduit 90 is a one-piece structure. Tube 92 includes tube inner diameter 100 and tube outer diameter 102. Heat shield 94 includes shield inner diameter 104. In the embodiment of FIG. 6, neither tube inner diameter 100 nor tube outer diameter 102 vary along a length of conduit 90. Shield inner diameter 104 decreases along first length 105 of conduit 90 for increasing the flow velocity of cooling fluid C within first gap 98 along first length 105. Shield inner diameter 104 also increases along second length 106 of conduit 90 for decreasing the flow velocity of cooling fluid C within first gap 98 along second length 106. Thus, first gap 98, formed between heat shield 94 and tube 92, also varies along the length of conduit 90 for varying the flow velocity of cooling fluid C within first gap 98 along the length of conduit 90. This embodiment may be employed, for example, under conditions where heat external to conduit 90 is at a maximum between first length 105 and second length 106 and increasing the fluid flow velocity of cooling fluid C increases the speed and efficiency at which heat is removed along a portion of conduit 90 exposed to the increased heat.

FIG. 7 is a side cross-sectional view of another embodiment of a heat-shielded conduit. As shown in FIG. 7, conduit 110 includes tube 112, heat shield 114, truss structure 116, and fitting 128. Fitting 128 extends axially from tube 112 and is formed integrally with tube 112 at an end of conduit 110. Heat shield 114 radially surrounds tube 112 to form first gap 118. Heat shield 114 also radially surrounds at least a portion of fitting 128 to form second gap 130. Truss structure 116 is formed integrally with tube 112, heat shield 114, and fitting 128 such that conduit 110 is a one-piece structure. Tube 112 includes tube inner diameter 120 and tube outer diameter 122. Heat shield 114 includes shield inner diameter 124. Fitting 128 includes fitting outer diameter 132. Fitting 128 is shown as a threaded connector including threads 134. As an alternative to threads 134, fitting 128 may be a barbed connector.

In the embodiment of FIG. 7, truss structure 116 spaces heat shield 114 from fitting outer diameter 132 to maintain second gap 130, in addition to spacing heat shield 114 from tube 112 to maintain first gap 118. As with the embodiment described above in reference to FIG. 2, the fluid in first gap 118 and second gap 130 may be static, or may be a flow of cooling fluid C, as shown in FIG. 7. In this embodiment, first gap 118 is in flow communication with second gap 130, such that cooling fluid C flows through first gap 118 and then flows through second gap 130 to carry much of the external heat absorbed by heat shield 114 away from heat shield 114 and out of conduit 110 before it reaches either tube 112 or fitting 128. This feature permits conduit 110, including fitting 128, to operate under more extreme external heat conditions. Although FIG. 7 shows cooling fluid C flowing in the same direction as fluid F, the present invention encompasses embodiments in which cooling fluid C flows counter-currently for enhanced heat transfer efficiency. Also, it is understood that the present invention encompasses embodiments having fitting 128 at both ends of conduit 110, and heat shield 114 radially surrounding at least a portion of each fitting 128.

Additive manufacturing processes allow the complex geometries of the heat-shielded conduits described above in reference to FIGS. 1, 2, 3, 4, 5, 6, and 7 to be realized. An example of such an additive manufacturing process is described in U.S. Patent Application No. 13/869042, "COMBUSTOR COMPONENT WITH COOLING HOLES FORMED BY ADDITIVE MANUFACTURING" assigned to United Technologies Corporation. For example, with reference to FIG. 2, to make conduit 10, tube 12 and heat shield 14 are integrally formed together as a stack of layers of material during an additive manufacturing process. Truss structure 16 is integrally formed with both tube 12 and heat shield 14 to space heat shield 14 from tube 12 and maintain first gap 18 between heat shield 14 and tube 12.

In another example, with reference to FIG. 7, to make conduit 110, tube 112, heat shield 114, and fitting 128 are integrally formed together as a stack of layers of material during an additive manufacturing process. Fitting 128 is formed extending axially from tube 114. Truss structure 116 is integrally formed with tube 112, heat shield 114 and fitting 128 to space heat shield 114 from tube 112 to maintain first gap 118, and to space heat shield 114 and from fitting 128 to maintain second gap 130. Threads 134 may also be formed integrally with fitting 128, or formed by machining after the additive manufacturing process.

The additive manufacturing process may include, for example, laser powder deposition or direct metal laser sintering. The heat-shielded conduits described above in reference to FIGS. 1, 2, 3, 4, 5, 6, and 7 may be made of a titanium alloy or a nickel-base alloy, for example, a high-temperature super alloy. The use of additive manufacturing eliminates the need for brazing or welding together individual components. As a result, significant cost savings are realized, both in labor, and in materials.

A heat-shielded conduit resulted from the present invention provides for more effective heat shielding than prior art insulated lines. As a result, any accumulation of deposits in the conduit from exposure to heat may be reduced or eliminated. Installation and maintenance costs are much lower than prior art insulated lines because a tube, a heat shield, and a truss structure are integrally formed together by additive manufacturing to make the heat-shielded conduit. The heat-shielded conduit may be installed as a single piece, requiring little, if any, additional maintenance.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for making a heat-shielded conduit, the method comprising:
building the heat-shielded conduit by a layer-by-layer additive manufacturing process;
forming, while building the heat-shielded conduit, a tube and a heat shield radially surrounding the tube; and
integrally forming a truss structure (116) together with both of the tube (112) and the heat shield (114) to space the heat shield from the tube and maintain a first gap (118) between the heat shield (114) and the tube (112); **characterized by**
forming a fitting (128) extending axially from the tube at an end of the conduit (110); and
integrally forming the truss structure (116) further includes forming the truss structure (116) together with both of the fitting (128) and the heat shield (114) to space the heat shield (114) from the fitting and maintain a second gap (130) between the heat shield (114) and the fitting.

2. The method of claim 1, wherein the first gap (118) and the second gap (130) are in flow communication, and the first gap and second gap are adapted to contain a flow of cooling fluid, and preferably wherein forming a fitting (128) includes at least one of forming a barbed connector and forming a threaded connector.

3. The method of claim 1, wherein additively manufacturing includes using at least one of laser powder deposition and direct metal laser sintering.

4. The method of claim 1, wherein building the conduit further comprises:
forming said tube (112) to have a tube inner diameter (120) and a tube outer diameter (122);
forming said heat shield (114) to have a shield inner diameter (124) greater than the tube outer diameter (122) to form the first gap (118) between the heat shield and the tube; and
forming said truss structure (116) to be integrally formed together with both of the tube (112) and the heat shield (114) to space the shield inner diameter from the tube outer diameter and maintain the first gap (118).

5. The method of claim 4, further comprising forming the tube inner diameter (120) to vary along a length of the conduit.

6. The method of claim 5, further comprising forming the tube inner diameter (120) to decrease along a length of the conduit (110) for increasing fluid flow velocity within the tube (112) along the length of the conduit (110).

7. The method of claim 5, further comprising forming the tube inner diameter (120) to increase along a length of the conduit (110) for decreasing fluid flow velocity within the tube (112) along the length of the conduit (110).

8. The method of claim 5, further comprising forming the tube inner diameter (120) to decrease along a first length of the conduit (110); and forming the tube inner diameter (120) of the tube (112) to increase along a second length of the conduit (110).

9. The method of any of claims 4 to 8, further comprising forming the first gap (118) to vary along a length of the conduit (110).

10. The method of claim 9, further comprising forming the first gap (118) to be adapted to contain a flow of cooling fluid.

11. The method of claim 10, further comprising forming the first gap (118) to decrease along a length of the conduit (110) for increasing cooling fluid flow velocity within the first gap (118) along the length of the conduit (110).

12. The method of claim 10, further comprising forming the first gap (118) to increase along a length of the conduit (110) for decreasing cooling fluid flow velocity within the first gap (118) along the length of the conduit (110).

13. The method of claim 10, further comprising forming the first gap (118) to decrease along a first length of the conduit (110) for increasing cooling fluid flow velocity within the first gap (118) along the first length of the conduit (110), and forming the first gap (118) to increase along a second length of the conduit (110) for decreasing cooling fluid flow velocity within the first gap (118) along the second length of the conduit (110).

14. The method of any of claims 4 to 13, further comprising:
forming the fitting (128) to extend axially from the tube (112) and to be integrally formed with the tube (112) at an end of the conduit (110);
forming the heat shield (114) to radially surround at least a portion of the fitting and to be spaced from the fitting by the truss structure (114) to maintain the second gap (130) between the heat shield and the fitting, and forming the fitting to include at least one of a barbed connector and a threaded connector, and/or forming the first gap and the second gap to be in flow communication, and the first gap and second gap to be adapted to contain a flow of cooling fluid.

## Patentansprüche

1. Herstellungsverfahren für eine wärmeabschirmende Leitung, das Verfahren umfassend:
Bauen der wärmeabschirmenden Leitung durch einen schichtweisen additiven Herstellungsprozess;
Formen eines Rohrs und einer Wärmeabschirmung, die das Rohr radial umgibt, während des Bauens der wärmeabschirmenden Leitung; und
einstückiges Formen einer Fachwerkstruktur (116) zusammen mit sowohl dem Rohr (112) als auch der Wärmeabschirmung (114), um die Wärmeabschirmung von dem Rohr zu beabstanden und eine erste Lücke (118) zwischen der Wärmeabschirmung (114) und dem Rohr (112) beizubehalten; **gekennzeichnet durch**
Formen eines Anschlussstücks (128), das sich an einem Ende der Leitung (110) axial von dem Rohr erstreckt; und
dass das einstückige Formen der Fachwerkstruktur (116) ferner Formen der Fachwerkstruktur (116) zusammen mit sowohl dem Anschlussstück (128) als auch der Wärmeabschirmung (114) beinhaltet, um die Wärmeabschirmung (114) von dem Anschlussstück zu beabstanden und eine zweite Lücke (130) zwischen der Wärmeabschirmung (114) und dem Anschlussstück beizubehalten.

2. Verfahren nach Anspruch 1, wobei die erste Lücke (118) und die zweite Lücke (130) in Strömungskommunikation stehen und die erste Lücke und die zweite Lücke dazu angepasst sind, eine Strömung von Kühlfluid zu enthalten und vorzugsweise wobei das Formen eines Anschlussstücks (128) mindestens eines von Formen eines Steckverbinders und Formen eines Schraubverbinders beinhaltet.

3. Verfahren nach Anspruch 1, wobei das additive Herstellen Verwenden von mindestens einem von Pulverauftrag und direktem Metall-Laser-Sintern beinhaltet.

4. Verfahren nach Anspruch 1, wobei das Bauen der Leitung ferner umfasst:
Formen des Rohr (112), sodass es einen Rohrinnendurchmesser (120) und einen Rohraußendurchmesser (122) aufweist;
Formen der Wärmeabschirmung (114), sodass sie einen Abschirmungsinnendurchmesser (124) aufweist, der größer als der Rohraußendurchmesser (122) ist, um die erste Lücke (118) zwischen der Wärmeabschirmung und dem Rohr zu formen; und
Formen der Fachwerkstruktur (116), sodass sie mit sowohl dem Rohr (112) als auch der Wärmeabschirmung (114) einstückig geformt ist, um den Abschirmungsinnendurchmesser von dem Rohraußendurchmesser zu beabstanden und die erste Lücke (118) beizubehalten.

5. Verfahren nach Anspruch 4, ferner umfassend Formen des Rohrinnendurchmessers (120), sodass er entlang einer Länge der Leitung variiert.

6. Verfahren nach Anspruch 5, ferner umfassend Formen des Rohrinnendurchmessers (120), sodass er sich entlang einer Länge der Leitung (110) verringert, zum Erhöhen der Fluidströmungsgeschwindigkeit innerhalb des Rohrs (112) entlang der Länge der Leitung (110).

7. Verfahren nach Anspruch 5, ferner umfassend Formen des Rohrinnendurchmessers (120), sodass er sich entlang einer Länge der Leitung (110) vergrößert, zum Verringern der Fluidströmungsgeschwindigkeit innerhalb des Rohrs (112) entlang der Länge der Leitung (110).

8. Verfahren nach Anspruch 5, ferner umfassend Formen des Rohrinnendurchmessers (120), sodass er sich entlang einer ersten Länge der Leitung (110) verringert; und Formen des Rohrinnendurchmessers (120) des Rohrs (112), sodass er sich entlang einer zweiten Länge der Leitung (110) vergrößert.

9. Verfahren nach einem der Ansprüche 4 bis 8, ferner umfassend Formen der ersten Lücke (118), sodass sie entlang einer Länge der Leitung (110) variiert.

10. Verfahren nach Anspruch 9, ferner umfassend Formen der ersten Lücke (118), sodass sie dazu angepasst ist, eine Strömung von Kühlfluid zu enthalten.

11. Verfahren nach Anspruch 10, ferner umfassend Formen der ersten Lücke (118), sodass sie sich entlang einer Länge der Leitung (110) verringert, zum Erhöhen der Kühlfluidströmungsgeschwindigkeit innerhalb der ersten Lücke (118) entlang der Länge der Leitung (110).

12. Verfahren nach Anspruch 10, ferner umfassend Formen der ersten Lücke (118), sodass sie sich entlang einer Länge der Leitung (110) vergrößert, zum Verringern der Kühlfluidströmungsgeschwindigkeit innerhalb der ersten Lücke (118) entlang der Länge der Leitung (110).

13. Verfahren nach Anspruch 10, ferner umfassend Formen der ersten Lücke (118), sodass sie sich entlang einer ersten Länge der Leitung (110) verringert, zum Erhöhen der Kühlfluidströmungsgeschwindigkeit innerhalb der ersten Lücke (118) entlang einer ersten Länge der Leitung (110), und Formen der ersten Lücke (118), sodass sie sich entlang einer zweiten Länge der Leitung (110) vergrößert, zum Verringern der Kühlfluidströmungsgeschwindigkeit innerhalb der ersten Lücke (118) entlang der zweiten Länge der Leitung (110).

14. Verfahren nach einem der Ansprüche 4 bis 13, ferner umfassend:
Formen des Anschlussstücks (128), sodass es sich an einem Ende der Leitung (110) axial von dem Rohr (112) erstreckt und mit dem Rohr (112) einstückig geformt ist;
Formen der Wärmeabschirmung (114), sodass sie mindestens einen Abschnitt des Anschlussstücks radial umgibt und von dem Anschlussstück durch die Fachwerkstruktur (114) beabstandet ist, um die zweite Lücke (130) zwischen der Wärmeabschirmung und dem Anschlussstück beizubehalten, und Formen des Anschlussstücks, sodass es mindestens eines von einem Steckverbinder und einem Schraubverbinder beinhaltet, und/oder Formen der ersten Lücke und der zweiten Lücke, sodass sie in Strömungskommunikation stehen, und die erste Lücke und die zweite Lücke dazu angepasst sind, eine Strömung von Kühlfluid zu enthalten.

## Revendications

1. Méthode de fabrication d'une canalisation à écran thermique, la méthode comprenant :
la construction de la canalisation à écran thermique par le biais d'un procédé de fabrication additive couche par couche ;
la formation, tout en construisant la canalisation à écran thermique, d'un tube et d'un écran thermique entourant radialement le tube ; et
la formation monobloc d'une structure en treillis (116) conjointement avec à la fois le tube (112) et l'écran thermique (114) pour espacer l'écran thermique par rapport au tube et maintenir un premier espace (118) entre l'écran thermique (114) et le tube (112) ; **caractérisée par**
la formation d'un raccord (128) s'étendant axialement depuis le tube au niveau d'une extrémité de la canalisation (110) ; et
la formation monobloc de la structure en treillis (116) comporte en outre la formation de la structure en treillis (116) conjointement avec à la fois le raccord (128) et l'écran thermique (114) pour espacer l'écran thermique (114) par rapport au tube et maintenir un second espace (130) entre l'écran thermique (114) et le raccord.

2. Méthode selon la revendication 1, dans lequel le premier espace (118) et le second espace (130) sont en communication d'écoulement, et le premier espace et le second espace sont conçus pour contenir un écoulement de fluide de refroidissement, et de préférence dans lequel la formation d'un raccord (128) comporte au moins l'une parmi la formation d'un connecteur cannelé et la formation d'un connecteur fileté.

3. Méthode selon la revendication 1, dans lequel la fabrication additive comporte l'utilisation d'au moins l'un parmi le dépôt de poudre par laser et le frittage laser direct de métal.

4. Méthode selon la revendication 1, dans lequel la construction de la canalisation comprend en outre :
la formation dudit tube (112) pour qu'il ait un diamètre intérieur de tube (120) et un diamètre extérieur de tube (122) ;
la formation dudit écran thermique (114) pour qu'il ait un diamètre intérieur d'écran (124) supérieur au diamètre extérieur de tube (122) pour former le premier espace (118) entre l'écran thermique et le tube ; et
la formation de ladite structure en treillis (116) pour qu'elle soit formée de manière monobloc avec à la fois le tube (112) et l'écran thermique (114) pour espacer le diamètre intérieur d'écran thermique par rapport au diamètre extérieur de tube et maintenir le premier espace (118).

5. Méthode selon la revendication 4, comprenant en outre la formation du diamètre intérieur de tube (120) devant varier sur une longueur de la canalisation.

6. Méthode selon la revendication 5, comprenant en outre la formation du diamètre intérieur de tube (120) devant diminuer sur une longueur de la canalisation (110) pour augmenter une vitesse d'écoulement de fluide à l'intérieur du tube (112) sur la longueur de la canalisation (110).

7. Méthode selon la revendication 5, comprenant en outre la formation du diamètre intérieur de tube (120) devant augmenter sur une longueur de la canalisation (110) pour diminuer une vitesse d'écoulement de fluide à l'intérieur du tube (112) sur la longueur de la canalisation (110).

8. Méthode selon la revendication 5, comprenant en outre la formation du diamètre intérieur de tube (120) devant diminuer sur une première longueur de la canalisation (110) ; et la formation du diamètre intérieur de tube (120) du tube (112) devant augmenter sur une seconde longueur de la canalisation (110) .

9. Méthode selon l'une quelconque des revendications 4 à 8, comprenant en outre la formation du premier espace (118) devant varier sur une longueur de la canalisation (110).

10. Méthode selon la revendication 9, comprenant en outre la formation du premier espace (118) devant être conçu pour contenir un écoulement de fluide de refroidissement.

11. Méthode selon la revendication 10, comprenant en outre la formation du premier espace (118) devant diminuer sur une longueur de la canalisation (110) pour augmenter une vitesse d'écoulement de fluide de refroidissement à l'intérieur du premier espace (118) sur la longueur de la canalisation (110).

12. Méthode selon la revendication 10, comprenant en outre la formation du premier espace (118) devant augmenter sur une longueur de la canalisation (110) pour diminuer une vitesse d'écoulement de fluide à l'intérieur du premier espace (118) sur la longueur de la canalisation (110).

13. Méthode selon la revendication 10, comprenant en outre la formation du premier espace (118) devant diminuer sur une première longueur de la canalisation (110) pour augmenter une vitesse d'écoulement de fluide à l'intérieur du premier espace (118) sur la première longueur de la canalisation (110), et la formation du premier espace (118) devant augmenter sur une seconde longueur de la canalisation (110) pour diminuer une vitesse d'écoulement de fluide de refroidissement à l'intérieur du premier espace (118) sur la seconde longueur de la canalisation (110).

14. Méthode selon l'une quelconque des revendications 4 à 13, comprenant en outre :
la formation du raccord (128) devant s'étendre axialement depuis le tube (112) et devant être formé de manière monobloc avec le tube (112) au niveau d'une extrémité de la canalisation (110) ;
la formation de l'écran thermique (114) devant radialement entourer au moins une partie du raccord et devant être espacé du raccord par la structure en treillis (114) pour maintenir le second espace (130) entre l'écran thermique et le raccord, et la formation du raccord devant inclure au moins l'un d'un connecteur cannelé et d'un connecteur fileté, et/ou la formation du premier espace et du second espace devant être en communication d'écoulement, et le premier espace et le second espace devant être conçus pour contenir un écoulement de fluide de refroidissement.
